Europäisches Patentamt

European Patent Office

Office européen des brevets

(11) Publication number: 0 211 101
A1

# EUROPEAN PATENT APPLICATION

(21) Application number: 85109965.5

(22) Date of filing: 08.08.85

(51) Int. Cl.⁴: **B01D 5/00** , F28D 7/02 , F28F 21/06

(43) Date of publication of application:
25.02.87 Bulletin 87/09

(84) Designated Contracting States:
AT CH DE FR GB IT LI NL SE

(71) Applicant: Interpat Service AG
Zeughausstrasse 14
CH-3175 Flamatt(CH)

(72) Inventor: The inventors have agreed to waive
their entitlement to designation

(54) Method and means for condensing/cleaning/vaporizing a flow of gas or liquid.

(57) The present invention relates to a method and means for condensing/cleaning/vaporizing a flow of gas or liquid, with the simultaneous recovery/emission of energy.

The method in accordance with the invention is characterized in that moist gas or liquid is caused to pass over heat exchanger surfaces providing an interchange with a counter-flowing heat-conducting medium, the temperature of which is such that the transfer of energy is sufficient to vaporize the liquid or to condense the gas as it passes over the heat exchanger surfaces.

The heat exchanger means in accordance with the invention is characterized by a number of pipes - (1;29) containing a heat-conducting medium moving in the opposite direction to the flow, said pipes being connected both to a common inlet means (7a;30) and to a common outlet means (7b;31).

FIG 6

The present invention relates to a method and a means for directly cleaning a flow of gas, recovering energy at the same time.

A means for dust separation and the simultaneous exchange of heat is previously disclosed in Swedish Patent 168.293. This means exhibits several disadvantages, however. The risk of rapid blocking of the heat exchanger elements is very great. Even when the exchanger elements are entirely clean, the resulting gas velocity is not very high, which is essential in order to achieve a satisfactory heat transfer coefficient. The theoretically possible high gas velocities would produce an excessively high pressure drop associated with performance losses of an unacceptable order of magnitude.

The aforementioned disadvantages can be eliminated to a certain extent by connecting the heat exchanger elements in pure counter-flow. Another problem arises in this respect, however, since the speed of the heat-conducting medium (water) in such a system is too low to permit heat transfer to be achieved on the liquid side in previously disclosed kinds of heat exchanger elements.

Another problem associated with previously disclosed heat exchanger technology which is applied in corrosive environments, for example for the separation by condensation and the cleaning of the flue gases from refuse incinerator plants, is the aggressive action of the deposits of hydrochloric acids produced by the incineration of plastics, for instance. These acids are often extremely volatile, as a consequence of which it can be difficult to cause them to condense on conventional heat exchanger surfaces.

The principal object of the present invention is to make available heat exchange technology which on the one hand will enable connection to be made in pure counter-flow, where the condensation of even highly volatile acids can take place without damaging effects on the exchanger elements.

A second object of the invention is to make available a technique whereby the speed of the heat-conducting medium can be matched accurately to existing conditions in order to achieve effective heat exchange.

A further object of the present invention is to make available a technique providing an exceptionally low pressure drop when connected into a gas flow.

Yet another object of the present invention is to make available a heat exchanger with a low weight per unit of volume and with a very high effective heat transfer surface.

Another object of the present invention is to make available a heat exchanger which is easy to inspect and clean, including during operation.

Yet another object of the invention is to make available heat exchangers which are easily combined together to build units of different sizes.

Yet another object of the present invention is to make available a heat exchanger which requires few or no welded joints to be made in the course of its manufacture, thereby greatly reducing or entirely eliminating the risk of corrosion damage in an aggressive environment.

The objects of the present invention stated above are achieved by the method and means having been given the characteristics indicated in the Patent Claims.

By causing moisture-saturated gas to pass over heat exchanger surfaces providing an interchange with a heat-conducting medium flowing in the opposite direction, the temperature of which is selected so that the transfer of energy is sufficient to cause the gas to condense or vaporize as it passes over the heat exchanger surfaces, a process is obtained which is particularly effective and reliable in operation.

By the arrangement of a number of pipes/hoses containing a heat-conducting medium flowing in the opposite direction to the gas flow, said pipes/hoses being connected both to a common inlet means and to a common outlet means, the flow of the heat-conducting medium may be so distributed as to permit greater surface contact and possibly a lower flow velocity to be achieved in the interests of optimizing the exchange of heat.

By providing main collecting pipes and main distribution pipes, a number of heat exchanger modules can be connected together in series and/or in parallel, depending on what thermal effects are to be managed.

By the arrangement of a double-walled pipe, between the walls of which a spiral element extends from the inlet to the outlet so as to provide a spiral-shaped flow channel for the heat-conducting medium, a design is achieved which provides extremely low flow resistance in a gas channel.

By arranging the pitch of the aforementioned spiral element to differ at different points along the length of the heat exchanger, it will be possible to regulate the velocity component of the heat-conducting medium in the axial sense at the different points. A variable pitch in the pipe is also able to take into account the different conditions existing between specific enthalpy and a sluggish exothermic and endothermic medium.

The arrangement of the inlet and outlet means, like the pipes, in a high-molecular plastics material provides the heat exchanger with unique characteristics with regard to its ability to resist corrosive environments. The pipes or the hoses in this case can be simply connected between the inlet and outlet means by so arranging the holes in these to exhibit an underdimension, which means that the holes must be enlarged before the narrow hoses are introduced. The high-molecular plastics material will thereafter resume its original position as far as possible, causing the hoses to be clamped in position.

By the arrangement of the inlet and outlet means axially behind each other, with the hoses extending uniformly along their lateral surfaces, an extremely efficient heat exchanger is produced which may be installed in gas ducts, either as an individual exchanger or in the form of a module within a larger system.

In a heat exchanger of the kind referred to above it is possible to arrange an inner pipe extending through the inlet and outlet means, said inner pipe carrying the refrigerant from a heat pump plant. It is possible in this way to utilize the inner pipe as a condenser and/or evaporator component.

Two series-connected heat exchangers with a circulation pump circulating a heat-conducting medium through them, with one of the exchangers being positioned, for example, in an inlet air duct and the other in an outlet air duct, provides for the very efficient recovery of energy from the outlet air, at the same time as the pressure drop across the heat exchangers is advantageously low.

By causing the flow of the heat-conducting medium to and from the inlet and outlet means to pass via a central shaft, the additional possibility is provided for arranging the heat exchanger so as to rotate in the open air, using it as a 'wind convector' which produces an efficient exchange of heat even when there is no wind. The possibility exists in this latter embodiment to arrange the narrow plastic hoses so as to exhibit a spiral-shaped pitch along the inlet and outlet means such that the exchanger can be caused to rotate through the effect of the wind with the possibility of connecting a generator to the rotation shaft of the exchanger.

The invention is described below in conjunction with the typical embodiment illustrated in the accompanying drawings, where:

FIG. 1 shows a vertical section through a first embodiment of a heat exchanger means in accordance with the invention;

FIG. 2 shows a partial section of a heat exchanger module composed of four heat exchanger means in accordance with Fig. 1;

FIG. 3 shows a heat exchanger means -viewed from above -composed of a number of heat exchanger modules in accordance with Fig. 2;

FIG. 4 shows a side view and a front view of a heat exchanger means in accordance with the invention, said means being shown with its outer casing in Fig. 4b;

FIG. 5 shows a block diagram for a plant for the recovery of energy from and for the cleaning of a process gas, said plant containing the heat exchanger means in accordance with a first embodiment of the invention;

FIG. 6 shows a longitudinal section through a second embodiment of a heat exchanger means in accordance with the invention;

FIG. 7 shows in a number of stages -a to d -how the holes are made in the inlet and outlet means in the embodiment in accordance with Fig. 6;

FIG. 8 shows how each underdimensioned hole is enlarged;

FIG. 9 shows in sectional view how each heat exchanger pipe (hose) is securely retained in position by clamping to the inlet or outlet means;

FIG. 10 shows two heat exchanger means in accordance with Fig. 6 connected in series for installation in separate flow ducts;

FIG. 11 shows a further variant of the heat exchanger means in accordance with Fig. 6 in which a central pipe is shown to extend through the inlet and outlet means; and

FIG. 12 shows a side view of a further variant of the heat exchanger means in accordance with Fig. 6, where the inlet and outlet flows are arranged via a central shaft.

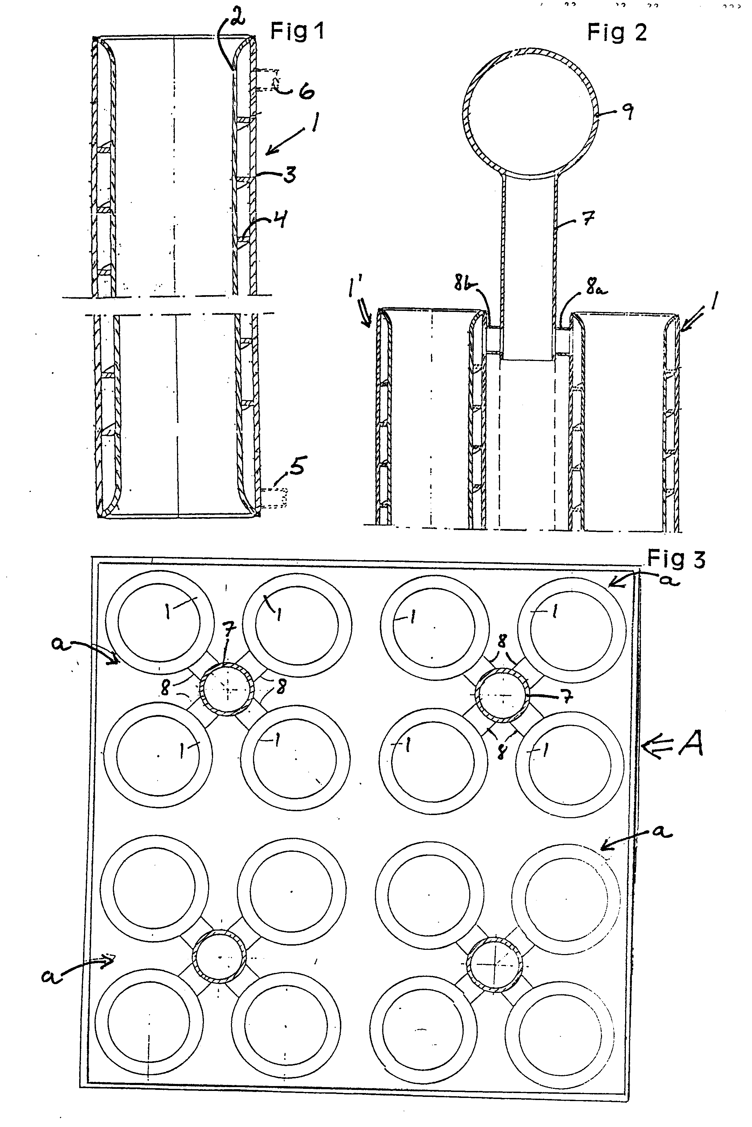

The heat exchanger means in accordance with Fig. 1 consists of a pipe 1 with an inner and an outer wall 2,3, and with a spiral element 4 arranged between said walls. An inlet 5 for a heat-conducting medium is shown towards the bottom of the pipe, whilst the outlet 6 is situated towards the top of the pipe. A spiral-shaped flow channel for the heat-conducting medium is thus formed between the inlet and the outlet. The heat exchanger means shown in Fig. 1 is particularly suitable for a heat-conducting medium with high specific enthalpy, for instance water. In the event of a heat-conducting medium with lower specific enthalpy being used, the exchanger means is arranged with a significantly greater flow cross-section, that is to say the distance between the two walls 2 and 3 is made greater; or, alternatively, the pitch of the spiral element 4 is increased; or, alternatively, a combination of these two is used.

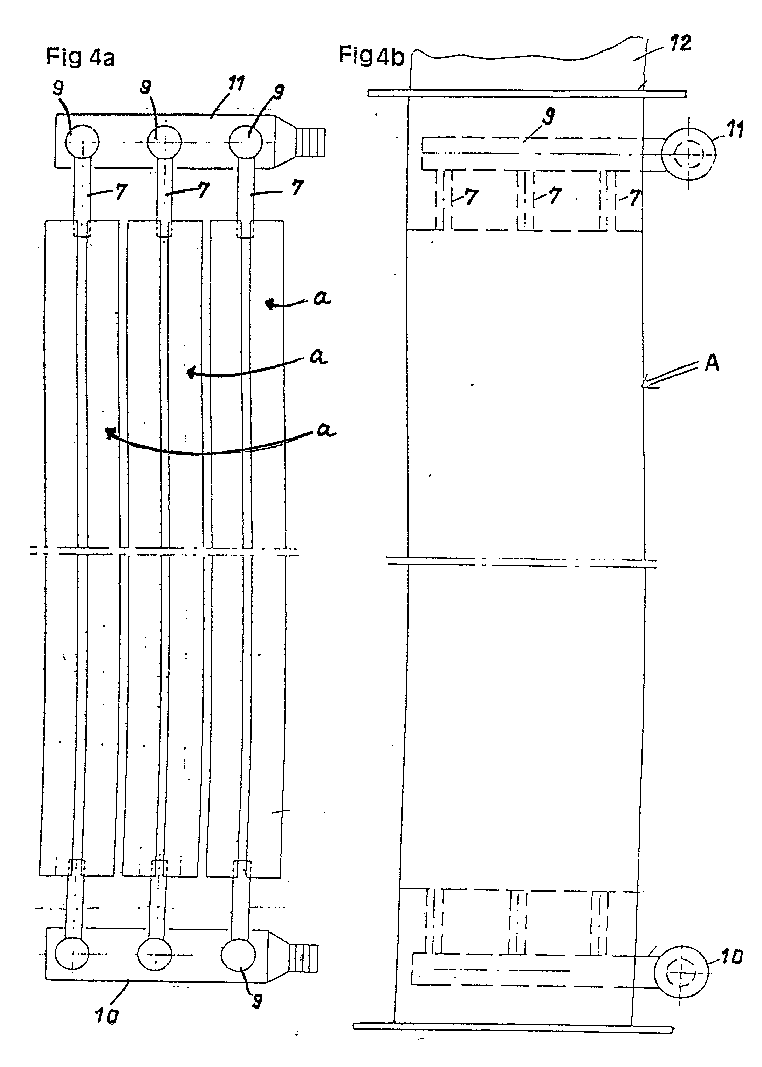

Shown towards the top of the heat exchanger module illustrated in Fig. 2 is a collecting pipe 7 which is connected via connection branches 8a and 8b to the pipes 1 and 1'. In the event of it being required to connect together a number of heat exchanger modules to form a heat exchanger system, a unit collector 9 is fitted to the collecting pipe 7 to permit the connection of a number of collecting pipes -see also Fig. 4a.

Fig. 3 shows a heat exchanger system consisting of four heat exchanger modules, in which each heat exchanger module comprises four heat exchanger means in accordance with the invention. Each heat exchanger module is designated by a , and the entire heat exchanger system is designated by A . These exchanger systems A can thus be connected together in parallel, depending on the size of the flow in which energy recovery/cleaning is to take place.

The heat exchanger system A is also shown in Fig. 4a, where the connection of the collection and distribution pipes, the unit distributors and collectors at the heat exchanger modules, and the exchanger system can be clearly seen.

Fig. 4b shows the manner in which the main distribution pipe 10 and the main collecting pipe 11 are positioned externally to the effective part of the heat exchanger system A , which is connected to a flow duct 12 through which a process gas, for example, passes.

The distances between the unit distributors/connectors and the heat exchanger modules a should preferably be selected so that the gas flow through the duct 11 is not adversely influenced by them.

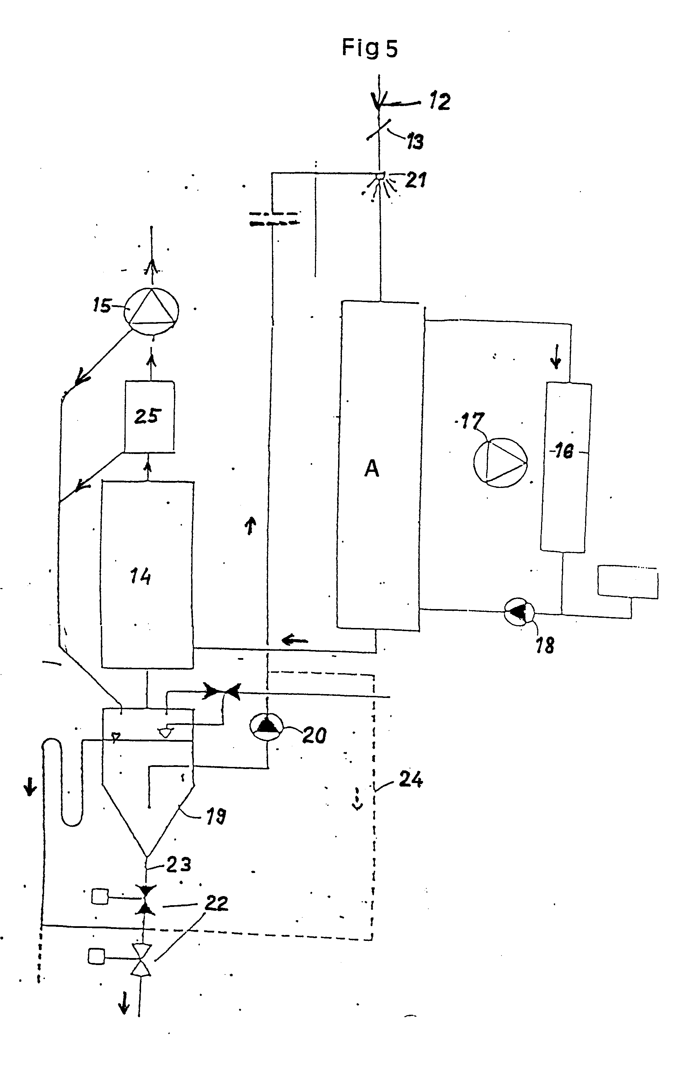

Shown in Fig. 5 is an installation in which a heat exchanger means in accordance with a first embodiment of the invention is present and is connected to an air heating system. This installation recovers energy from a process gas at the same time as it cleans the gas.

The gas is passed for this purpose through a duct 12 via an inlet valve 13 and into the heat exchanger system A . The cleaned and cooled gas passes from here to a droplet eliminator 14 under the effect of the fan 15. The heat absorbed by the flow of liquid is given up in an air heater 16 equipped with a fan 17. The flow through the heat exchanger system A and the air heater 16 is maintained by a circulation pump 18.

In order to keep the heat exchanging surfaces clean, washing water is drawn from a tank 19 by a washing water pump 20 to the nozzle 21, from which the washing water is sprayed into the process gas up-stream of the heat exchanger system. The washing water is vaporized in this case by the process gas and cools it to the point of saturation. When the process gas enters the heat exchanger means, the water is condensed on the heat exchanger surfaces of the means at a very high heat transfer coefficient. Because the washing water tank 19 is connected to the means via a drain channel in the droplet eliminator 14, any impurities from the gas collect in the washing water tank. These impurities are for the most part carried away from the system by the discharge system 22, into which the drain 23 from the tank empties. The discharge system 22 can consist of two throttle valves or ball valves connected in sequence and constitutes previously disclosed technology.

In view of the particularly high dust loading imposed on the plant, it may be necessary to resort to forced washing-out of the impurities. A separate line 24 is connected for this purpose from the pressure side of the washing water pump 20 to the discharge system 22. The valve functions of the discharge system are then reversed.

The extremely volatile gas which may remain in the outlet channel, for example in a refuse incineration process where the incineration of, amongst other things, plastics produces extremely aggressive acids, can be caused in accordance with the present invention to condense on the surfaces of the heat exchanger means 25, that is to say in an exchanger means situated down-stream of the system A . The advantage of dividing up the condensation of the flue gases into two or more stages is that more efficient total condensation of the gas can take place, at the same time as the final condensation is able to occur at a very much lower temperature or, more precisely, at a temperature at which it is possible to make use of plastics materials in the component parts of the heat exchanger means 25. By the use of a multi-stage condensation process it is possible to cause more or less all the moisture to condense out, and this can be drained in the form of a liquid into the washing water tank 19. In the event of not all the moisture present in the flue gas being caused to condense in the heat exchanger means, any condensate from the cover of a flue gas fan 15 can also be drained into the washing water tank 19.

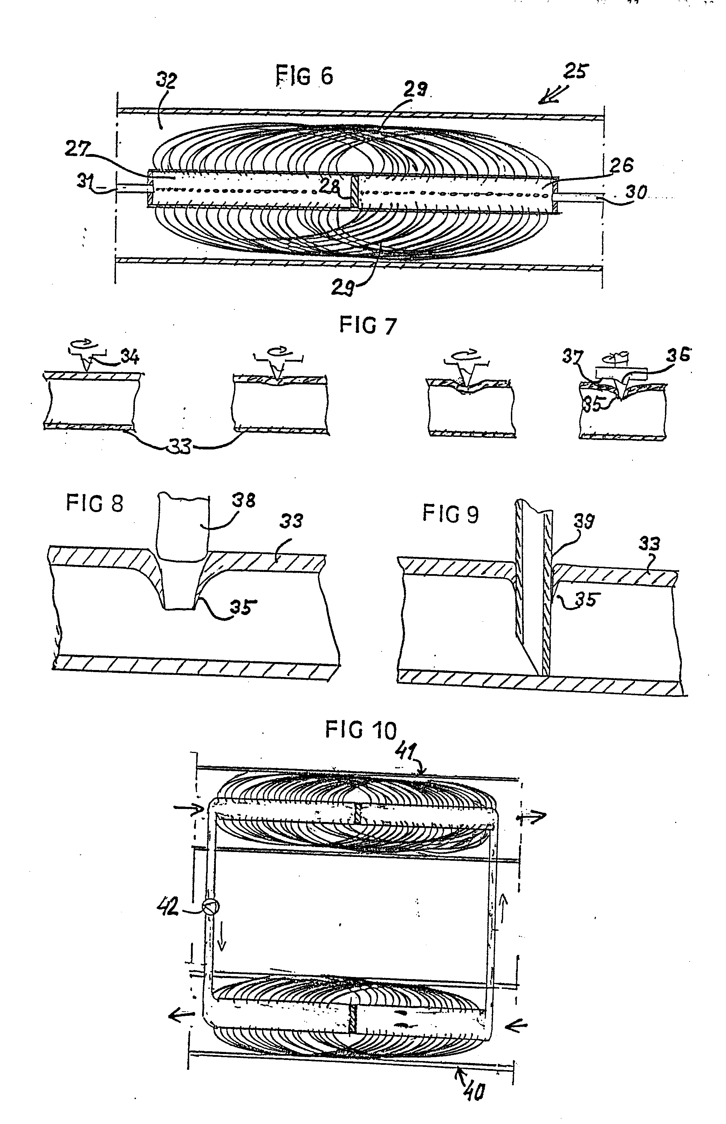

The nature of the heat exchanger 25 described in Fig. 5 is illustrated in Fig. 6. The reference designations 26 and 27 are used to denote inlet and outlet means which are separated by a pipe with an inlet 30 and an outlet 31 and centrally plugged - at 28. Narrow hoses 29 connect the inlet and outlet means 26 and 27 with each other. The heat-conducting medium enters the means 26 at 30, from where it is transported to the means 27 via the parallel flow in all the hoses 29. These hoses are of small cross-section -less than 5 mm -in respect of which the Reynolds' number indicates laminar flow in essentially all operating cases with moderate driving pressures. The heat exchanger means should preferably be installed in a gas or flow duct 32 where an essentially pure counter-flow heat exchange process will occur.

Fig. 7 illustrates four different stages for making holes in a plastic pipe 33, which may be the inlet and outlet means 26 and 27 in accordance with Fig. 6. The rotating tip 34 of an implement is placed against the outer generated surface of the pipe 33 with a balanced force which generates frictional heat at the same time as the tip penetrates deeper into and through the wall of the pipe forming a collar 35 extending into the pipe. Above the tip 34 of the implement is a cutting edge 36 which bores the hole in the pipe 33 whilst preserving the collar 35. A shoulder 37 on the implement will, once the boring operation is complete, reach the generated surface of the pipe and prevent any further cutting or machining.

The hole with its collar in the pipe 33 exhibits an intentional underdimension, which is demonstrated in Fig. 8 by the introduction of an implement 38 for enlarging the hole in order to permit the introduction of the end 39 of a narrow hose - Fig. 9 -which is secured by being clamped in the hole as the material around the hole attempts to return to its original position.

Illustrated in Fig. 10 is an inlet and outlet duct 40 and 41 in which heat exchanger means in accordance with Fig. 6 have been installed connected in series. A circulation pump 42 provides the circulation of a heat-conducting medium. The design illustrated in Fig. 10 provides high efficiency transfer or energy, on the one hand by dividing up the flow of the heat-conducting medium into a large number of small, subsidiary flows in the narrow hoses, the walls of which, in spite of the poor thermal conductivity of the plastics material, give the comparatively slow flow of the heat-conducting medium sufficient time to exchange energy with the surroundings, and on the other hand by permitting the flows to take place essentially as counterflows.

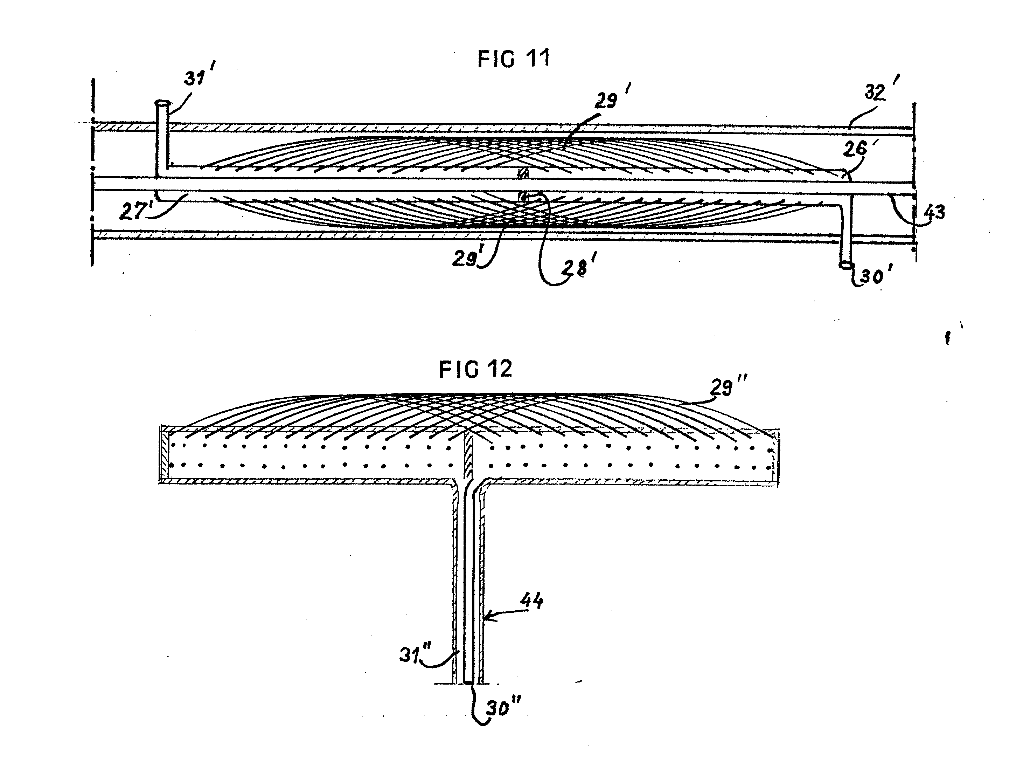

The heat exchanger means shown in Fig. 10 can also be of the kind which may be appreciated from Fig. 11. In this embodiment, in addition to the inlet 30' and the outlet 31' in the inlet and outlet means 26' and 27', the narrow hose 29' and a gas flow duct 32' also have an inner, central pipe 43, which can be a condenser component and/or an evaporator component connected to a heat pump. Said pipe 43 may be made of a metal, preferably copper. What is achieved in this case is a very compact heat exchanger means which permits the exchange of energy between three separate media.

Instead of using a single pipe 43 in accordance with Fig. 11, it is possible to use a larger pipe, to the end faces of which a bundle of capillary tubes is attached in such a way that they extend between the ends inside the pipe. The whole may be oil-filled so as to reduce the thermal stresses when the system is used as an evaporator in a heat pump installation. The inner, oil-filled space is thus enclosed, and the exchange of heat with the heat-conducting medium takes place via the generated surface of the larger pipe.

Fig. 12 also illustrates an embodiment of the heat exchanger means in accordance with the invention in which an inlet 30" and an outlet 31" are positioned on a central, rotatable shaft 44. The narrow hose 29" can be arranged with a pitch and with a mutual separating distance such that the exchanger means, when installed out of doors, will be caused to turn or rotate through the effect of the wind. Rotation will then take place about the shaft 44, which is divided into two pipes arranged concentrically one inside the other, one of which constitutes an inlet 30" and the other an outlet 31". This design can also be applied as a wind convector in such a way that it is caused to rotate when there is no wind and the conditions in other respects are such that energy can be taken from the air.

The invention is not restricted to the embodiments indicated above, and modifications can be made within the scope of the following Patent Claims.

## Claims

1. Method for condensing/cleaning/vaporizing a flow of gas or liquid with the simultaneous recovery or emission of energy, **characterized** in that a moisture-saturated gas or liquid is caused to pass over heat exchanger surfaces providing an interchange with a counter-flowing heat-conducting medium, the temperature of which is such that the transfer of energy is sufficient to cause the gas to condense or the liquid to be vaporized as it passes over the heat exchanger surfaces.

2. Heat exchanger means for cleaning/condensing/vaporizing a flow and for executing the method in accordance with Patent Claim 1, **characterized** by a number of pipes - (1;29) containing a heat-conducting medium moving in the opposite direction to the flow, said pipes (1;29) being connected both to a common inlet means (7a;30) and to a common outlet means - (7b;31).

3. Means according to Patent Claim 2, **characterized** in that the inlet and outlet means are connected to main distribution pipes or to main collecting pipes (10,11).

4. Means according to Patent Claim 2, **characterized** in that each pipe (1) has at least two walls (2,3) between which there is arranged at least one spiral element (4) extending between the inlet and outlet means (7,9) so as to provide a spiral-shaped flow channel for the heat-conducting medium, and in that the pipes are situated in a gas channel with their outer and inner boundary surfaces exposed to the flue gas and/or process gas flowing past.

5. Means according to Patent Claim 4, **characterized** in that the pitch of the spiral element (4) differs at different points along the length of the heat exchanger means.

6. Means according to Patent Claim 2, **characterized** in that the inlet and the outlet means - (30,31), like the pipes (29), are manufactured from a high-molecular plastics material, in conjunction with which holes/connecting pins are arranged in both the inlet and outlet means with an underdimension/overdimension in relation to the plastic tubes/hoses for the purpose of keeping them securely clamped in position on the hoses.

7. Means according to Patent Claim 6, **characterized** in that the inlet and outlet means are situated axially behind each other.

8. Means according to Patent Claim 7, **characterized** in that there extends centrally through the inlet and outlet means (30,31) at least one inner pipe (43).

9. Means according to Patent Claims 2 and 6, **characterized** by an inlet and outlet means with an associated plastic hose positioned in a duct - (40) for absorbing energy from a flow in said duct, whilst a second inlet and outlet means connected in series with said first inlet and outlet means by means of connecting plastic hoses is positioned in a second duct for the purpose of giving off energy to a flow in the duct.

10. Means according to Patent Claims 2, 6 and 7, **characterized** in that the flow to the inlet means (30") and the flow from the outlet means (31") takes place via a central shaft (44) which can also serve at the same time as the rotation shaft for the heat exchanger means.

Fig 1

Fig 2

Fig 3

Fig 4a

Fig 4b

Fig 5

FIG 6

FIG 7

FIG 8

FIG 9

FIG 10

FIG 11

FIG 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 048 233  (J. WEITMAN) * Abstract; claim 1 * | 1 | B 01 D    5/00 F 28 D    7/02 F 28 F   21/06 |
| X | GB-A- 404 077  (THE WHESSOE FOUNDRY & ENGINEERING CO., LTD.) *  Figures 1-3; page 2, line 70 - page 3, line 16 * | 2-4 | |
| X | EP-A-0 010 818  (AKZO N.V.) *  Page  5, line 1 - page 6, line 34; figures 1-10 * | 2 | |
| A | | 6 | |
| A | GB-A-2 092 691  (M. DAGUES) | | |

|  |  |
|---|---|
|  | TECHNICAL FIELDS SEARCHED (Int. Cl.4) |
|  | B 01 D    5/00 F 28 D    7/00 F 28 F   21/00 |

The present search report has been drawn up for all claims

| Place of search | Date of completion of the search | Examiner |
|---|---|---|
| THE HAGUE | 14-04-1986 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82